# EUROPEAN PATENT SPECIFICATION

(11) **EP 1 683 322 B1**
(45) Date of publication and mention of the grant of the patent: **30.07.2008**
(21) Application number: 04798967.8
(22) Date of filing: 11.11.2004
(51) Int. Cl.: H04L 29/06, H04Q 7/38, H04L 12/56

(54) **SHARED SECRET USAGE FOR BOOTSTRAPPING**
BENUTZUNG EINES GEMEINSAM BENUTZTEN GEHEIMNISSES FÜR BOOTSTRAPPING
UTILISATION DE SECRET PARTAGE POUR LA FONCTIONNALITE D'AMORCAGE

(30) Priority: 11.11.2003 GB 0326265
(43) Date of publication of application: 26.07.2006
(73) Proprietor: Nokia Corporation, 02150 Espoo (FI)
(72) Inventor: HAUKKA, Tao, FIN-90580 Oulu (FI); LAITINEN, Pekka, FIN-00800 Helsinki (FI); ASOKAN, Nadarajah, FIN-02320 Espoo (FI)
(74) Representative: Ruuskanen, Juha-Pekka
(86) International application number: PCT/IB2004/003858
(87) International publication number: WO 2005/046163

(56) References cited:
- WO-A-01/26322
- US-A1- 2003 166 398
- 3GPP: "3GPP TS ab.cde V0.3.0: 3rd Generation Partnership Project;Technical Specification Group Services and System Aspects; Bootstrapping of application security using AKA and Support for Subscriber Certificates; System Description"[Online] October 2003 (2003-10), XP002320570 POVOA DE VARZIM Retrieved from the Internet: URL:http://www.3gpp.org/ftp/Specs/archive/ 33_series/33.109/> [retrieved on 2005-04-07]
- "Generic Authentication Architecture (GAA); Generic Bootstrapping Architecture" 3GPP TSG SA WG3 SECURITY, XX, XX, no. S332, 9 February 2004 (2004-02-09), pages 1-17, XP002293950
- GLASS S ET AL: "RFC 2977: Mobile IP Authentication, Authorization and Accounting Requirements" RFC, October 2000 (2000-10), XP002213102

## Description

### Field of the Invention

The present invention relates to techniques in communication systems for authentication, and particularly but not exclusively to bootstrapping techniques.

### Background to the Invention

So-called third generation (3G) mobile communication networks are currently being deployed. In Europe such networks conform to various standards formalised by the third generation partnership project (3GPP), which has a number of versions, generally known as releases.

In 3GPP there has been proposed (3GPP TS 33.220) an authentication infrastructure. This infrastructure may be utilised to enable application functions in the network side and on the user side to communicate in situations where they would not otherwise be able to do so. This functionality is referred to as "bootstrapping of application security", or more generally simply as "bootstrapping".

The general principles of bootstrapping are that a generic bootstrapping server function (BSF) allows a user equipment (UE) to authenticate therewith, and agree on session keys. Such authentication is preferably based on authentication and key agreement (AKA). By running AKA, the mobile terminal and the network mutually authenticate each other and agree on keys, specifically a confidentiality key (CK) and an integrity key (IK). After this authentication, the UE and an operator-controlled network application function (NAF), which may also be referred to as a service provider, may run some application specific protocol where the authentication of messages is based on the session keys agreed between the UE and the BSF.

The bootstrapping function is not intended to be dependent upon any particular network application function. The server implementing the bootstrapping function must be trusted by the home operator to handle authentication vectors. Network application functions in the operators home network are currently proposed to be supported, but this does not preclude the possibility of support of network application functions in a visited network, or even in a third network.

In the proposals for implementation of bootstrapping techniques, it is proposed that the UE sends a service request to a NAF. The NAF must then communicate with the BSF in order to retrieve the key(s) required for authentication with the UE. The need for the NAF to communicate with the BSF delays the reaction time for a NAF access, such that a user may experience a delay.

It is an aim of the invention to provide an improved technique, which addresses the above-stated problem.

WO 01/26322 discloses a system for providing secure communication of messages between a mobile node and a home domain using a foreign domain, wherein the identity of the mobile node transmitted to the home domain in a registration request is encrypted and the home domain provides encryption keys for encrypting information to be transmitted between the home domain, the foreign domain and the mobile node. US 2003/166398 discloses a wireless telephone and messaging system that provides secure immediate wireless access (SIWA) to wireless telephones onto existing wireless networks, such as GSM, CDMA, TDMA, and analog (AMPS). 3GPP TS ab.cde V0.3.0, "Technical Specification Group Services and System Aspects; Bootstrapping of Application Security using AKA and Support for Subscriber Certificates; System Description" (XP002320570) discloses 3GPP standardisation information on the authentication and key agreement.

### Summary of the Invention

The above-stated problem is solved by a method having the features of claim 1, a bootstrapping functional entity having the features of claim 13, a user equipment having the features of claim 20, a network application function entity having the features of claim 22 and a communication system having the features of claim 26. Advantageous embodiments thereof are defined in the respective dependent claims.

According to the present invention there is provided a method of providing bootstrapping information to a network application function entity to enable access by a user equipment, characterised in that the method comprises: generating a request from a user equipment to provide bootstrapping information to at least one network application function entity; receiving said request at a bootstrapping functional entity; determining said bootstrapping information at said functional entity; and transmitting said determined bootstrapping information to the at least one network application function entity.

Said bootstrapping information may be determined in dependence on a transaction identifier included in said request.

The request may include at least one network application function identity. The request may include at least one type of network application function.

Said bootstrapping information may be determined by performing a bootstrapping operation.

The step of determining the bootstrapping information may comprise establishing an authentication procedure between the user equipment and the boot strapping function.

The authentication procedure between the user equipment and the boot strapping function may establish a shared key.

The bootstrapping information provided to the at least one network application function may be based on the shared key.

The bootstrapping information provided to the at least one network application function may include a transaction identifier. The bootstrapping information provided to the at least one network application function may include subscriber profile information.

The shared key bootstrapping information that may be provided to the network application function may be network application function specific. The step of obtaining bootstrapping information may include retrieving information from a home subscriber server.

In an aspect the invention provides an authentication entity characterised in that the authentication entity includes: receiving means for receiving a request from a user equipment to provide bootstrapping information to at least one network application function entity; determining means for determining said bootstrapping information; and transmitting means for transmitting said bootstrapping information to the at least one network application function entity.

The authentication entity may further include determining means for determining at least one network application function entity identity from said request.

The authentication entity may comprise a bootstrapping functional entity. The determining means for determining the bootstrapping information may comprise authentication means for establishing an authentication procedure between the user equipment and the boot strapping function.

The authentication means may establish a shared key. The bootstrapping information provided to the at least one network application function entity may be based on the shared key. The bootstrapping information provided to the at least one network application function entity may include a transaction identifier. The bootstrapping information provided to the at least one network application function entity may include subscriber profile information.

In an aspect the invention provides a user equipment, characterised in that the user equipment is adapted to transmit a request to an authentication entity to provide bootstrapping information to at least one network application function entity. The request may be transmitted to a bootstrapping functional entity. The request may include one of a transaction identifier or a network application function identity.

In an aspect the invention provides a network application function entity, characterised in that the network application function entity is adapted to receive unsolicited bootstrapping information from an authentication function entity. Said bootstrapping information may be associated with a user equipment. The bootstrapping information may be received from an authentication function, the bootstrapping information being established between said authentication function and the user equipment. The receipt of the bootstrapping information from an authentication function entity may be responsive to a request by a user equipment to the authentication function entity.

In a further aspect, the invention provides a communication system including at least one user equipment and at least one network application functional entity, the system further including a bootstrapping functional entity, wherein the user equipment includes means to transmit a request to push authentication information to at least one network application function, the bootstrapping functional entity includes: receiving means for receiving the request from the user equipment, and transmitting means for transmitting said authentication information to the at least one network application function entity, and the at least one network application function includes means adapted to receive unsolicited bootstrapping information from the bootstrapping functional entity.

### Brief Description of the Figures

The invention is described with regard to particular exemplary embodiments by way of reference to the accompanying drawings, in which:
Fig. 1 illustrates an exemplary architecture for implementing embodiments of the invention;
Fig. 2 illustrates the procedure followed in an exemplary embodiment of the invention; and
Fig. 3 illustrates the signalling exchange in an exemplary embodiment of the invention.

### Description of Preferred Embodiment

The invention is described herein by way of reference to an exemplary embodiment. In particular, the invention is described in the context of the implementation of bootstrapping techniques in a 3GPP system architecture. The invention, however, is not limited to specifics of the embodiment described herein. For example, the invention may be applied in 3GPP2 system architectures.

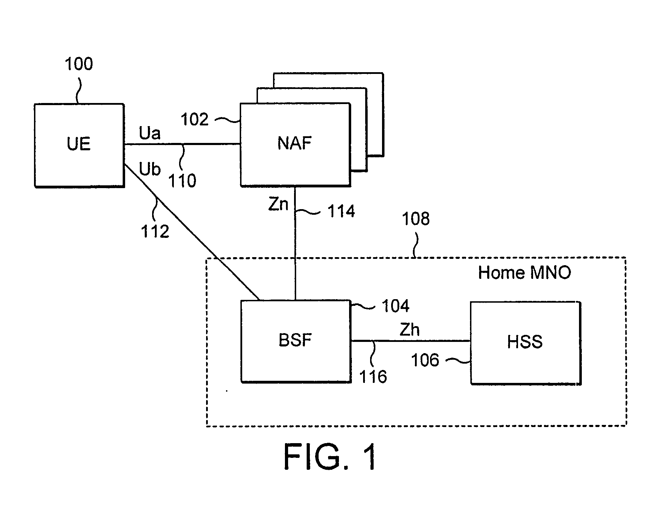

Referring to Fig. 1, there is illustrated an exemplary network architecture overview for describing the bootstrapping process in accordance with the invention. The network architecture includes a user equipment (UE) 100, at least one network application function (NAF) 102, a bootstrapping server function (BSF) 104, and a home subscriber system (HSS) 106. The BSF 104 and HSS 106 form part of a home mobile network operator (MNO) 108. The UE 100 connects into the MNO 108 in accordance with well-known mobile communication techniques, which are outside the scope of the present invention. The NAF 102 may be provided in a further separate network.

The NAF 102 is hosted in a network element, preferably under the control of the MNO 108, and the BSF is also preferably hosted in a network element under the control of the MNO 108. Thus, for practical purposes, each of the NAF 102 and the BSF 104 may be considered to be a network element.

As illustrated in Fig. 1, the UE 100 communicates with the NAF 102 on a Ua interface 110. The UE 100 communicates with the BSF 104 on a Ub interface 112. The NAF 102 communicates with the BSF 104 on a Zn interface 114. The BSF 104 communicates with the HSS 106 on a Zh interface 116.

The principle of bootstrapping is that the user equipment and the bootstrapping function mutually authenticate each other, preferably using the AKA protocol, and agree on session keys that are afterwards applied between the user equipment and an operator-controlled network application function. The key material is generated specifically for each network application function independently. After the bootstrapping operation has been completed, the user equipment and the operator-controlled network application function may run some specific protocol where the authentication of messages will be based on those keys generated during the mutual authentication between the user equipment and the bootstrapping server function. The keys are thus used for authentication and integrity protection, and preferably also for confidentiality. The network application function is then able to acquire the shared key material established between the user equipment and the bootstrapping server function.

The communication interface 112 supports the bootstrapping authentication and key agreement protocol, to provide the mutual authentication and key agreement between the UE 100 and the BSF 104. This protocol is preferably based on the 3GPP AKA protocol.

The interface 116 allows the BSF 104 to fetch any required authentication information and subscriber profile information from the HSS 106. The interface 110 supports the application protocol which is secured using the session keys agreed between the UE 100 and the BSF 104, based on the protocol supported by the interface 112. The interface 114 is used by the NAF 102 to fetch the key material agreed in the protocol supported on the interface 112 from the BSF 104. The interface 114 may also be used to fetch subscriber profile information from the BSF 104.

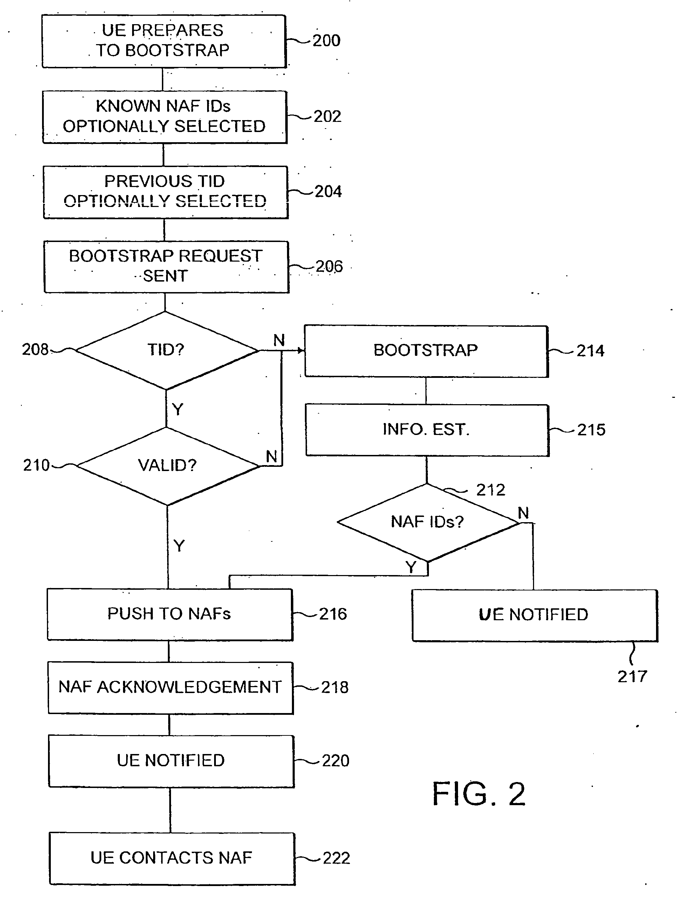

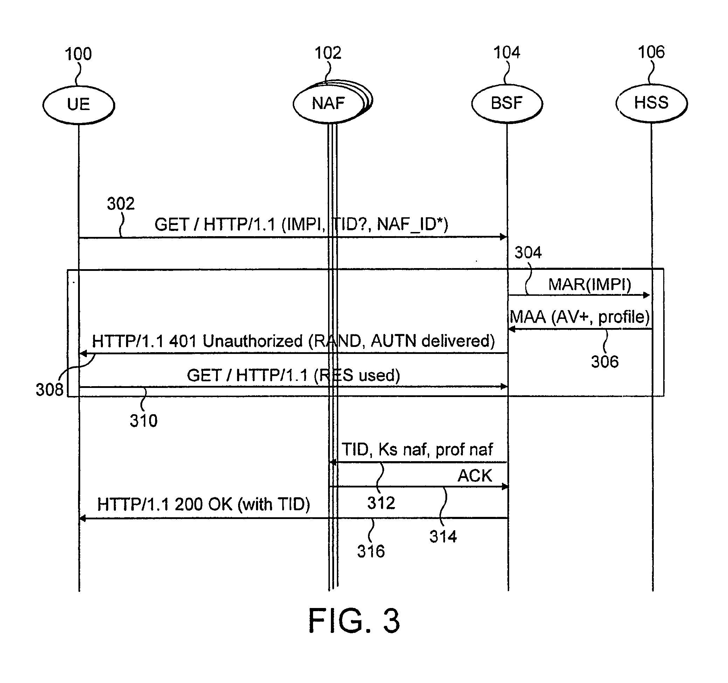

With further reference to the flow diagram of Fig. 2 and the signalling diagram of Fig. 3, a preferred embodiment for the transfer of bootstrapping information in accordance with the invention is described.

The invention allows for the UE 100 to trigger the BSF 104 to "push" authentication information toward one or more NAFs 102. Thus, in accordance with the invention, the BSF provides authentication information to one or more NAFs without a request being made from the NAF to the BSF. The invention does not propose any modification to existing authentication protocols/techniques, or new authentication protocols/techniques. The invention may be applied in conjunction with any existing or proposed authentication protocols/techniques.

Referring to Fig. 2, in a step 200 the UE 100 prepares to trigger a push operation from the BSF 104 to the NAF 102. It should be noted that in practice the UE 100 may trigger the push operation to a plurality of NAFs.

In an embodiment, the UE 100 prepares a list of network application function identities (NAF_ID). This is represented by step 202 in Fig. 2. The network application function identities are known by the BSF 104, such that the BSF can identify the NAFs to which bootstrapping information is to be pushed once the bootstrapping information is established.

The UE 100 may also, in embodiments, trigger the BSF 104 to push bootstrapping information towards one or more NAFs 102 without the BSF performing a full bootstrapping operation. In such an embodiment, a transaction identifier (TID) from a previous bootstrapping procedure is utilised, as represented by step 204 in Fig. 2. The transaction identifier identifies one bootstrapping operation, i.e. an earlier bootstrapping operation. The use of the transaction identifier requires one or more network application function identities to be present in the request sent by the UE. The transaction identifier identifies a previous transaction to the BSF, and the BSF can access bootstrapping information obtained and used for that previous transaction.

As represented by step 206, the bootstrap operation is begun by the UE 100 transmitting a bootstrap request toward the BSF 104. The bootstrap request signal is represented by signal 302 in Fig. 3. The content of the request message 302 is dependent upon whether the optional steps 202 and 204 are implemented. As a minimum, the request message 302 must include an IMPI (IP multimedia private identity). This uniquely identifies the UE 100.

Where optional step 202 is implemented, the request may contain one or more network application function identities, as denoted by NAF_ID*, the asterisk denoting that zero or more NAF_IDs are present.

Where optional step 204 is implemented, the request may include a transaction identifier, as denoted by TID? The designation "?" denotes that the transaction identifier TID is optional. If the request includes a transaction identifier, then it must include at least one network application function identity NAF_ID to which bootstrapping information is to be pushed. If the request does not include a transaction identifier (which inherently identifies at least one network application function identity), it may include at least one network application function identity from step 202.

Where there is no transaction identifier and no NAF_IDs included in the request, then the request from the UE does not result in the pushing of bootstrapping information to a NAF. Instead, a bootstrapping operation is simply carried out.

As illustrated by step 208 in Fig. 2, on receipt of the request message the BSF 104 determines whether the message contains a transaction identifier. If the message does contain a transaction identifier, then in a step 210 the BSF 104 determines whether such transaction identifier is valid. For example, the BSF 104 may determine an old transaction identifier to be invalid, as too much time has elapsed since that transaction. Other checks on the validity of the transaction identifier may be performed. If the transaction identifier is determined to be valid, then the bootstrapping information used in that previous transaction, stored by the BSF 104, may be re-used. After step 210 the bootstrapping information is then ready to be pushed to the NAFs identified by the NAF_IDs in the transaction identifier, as discussed further hereinbelow, and the process moves on to step 216.

If in step 208 it is determined that there is no transaction identifier present, or if in step 210 it is determined that the transaction identifier is not valid, then the process moves to step 214, and a bootstrap operation is performed. On successful completion of the bootstrap operation, in a step 215 the bootstrap information is established.

Thereafter, in step 212 of the described embodiment, the BSF 104 determines whether the request message 302 includes any network application function identities. If any such identities are present, then the NAF-IDs are provided in step 216 to push the bootstrapping information to such network application functions. NAF identities may be present if they are specifically included in the request in step 202. Alternatively the NAF identities may be present as a result of a transaction identifier included in step 204. Thus even if the transaction identifier is determined not to be valid, the NAF identifiers associated therewith may still be used. As further described herein below, the NAF identifiers may be provided by further alternative techniques.

If step 212 determines that there are no NAF_IDs present, then the process simply moves to step 217 and the UE is notified that no push operation has been performed.

In step 214, the BSF 104 performs a conventional bootstrap operation. This conventional bootstrap operation is illustrated in Fig. 3 by messages 304, 306, 308, 310. The completion of the bootstrapping operation is represented by the establishment of the bootstrapping information in step 215.

For bootstrapping, the BSF 104 transmits a MAR (IMPI) message 304 to the HSS 106. The HSS 106 returns a MAA (AV+, profile) message 306. The signal exchange 304 and 306 allows the BSF 104 to retrieve the user profile for the UE 100, and an authentication vector for the UE 100. The authentication vector comprises a plurality of elements, as is known in the art, and is represented by the notation "AV+". "AV+" denotes one or more attribute values (AVs). The authentication vector includes RAND, AUTN, XRES, CK key and IK key. The signal exchange 304 and 306 may not be needed if the BSF already has the authentication vectors for the UE.

The BSF 104 then returns an " 401 unauthorised (RAND, AUTN delivered)" message 308 to the UE 100 i.e. the BSF 104 forwards the RAND and AUTN to the UE. The XRES, CK and IK are not forwarded. This message demands (or challenges) the UE 100 to authenticate itself.

Responsive to the message 308, the UE 100 calculates the message authentication code (MAC) so as to verify the challenge from the authenticated network. The UE calculates CK, IK, and RES. As a result, the session keys CK and IK are present in both the UE 100 and the BSF 104. The UE 100 then returns a "GET (RES used)" message 310, being a further request message. The further request message, 310, includes the Digest AKA RES as the response to the BSF challenge. If the RES contained in this message, as calculated by the UE 100, matches the XRES in the AV provided by the HSS to the BSF, then the UE is authenticated.

The key material Ks is generated, separately, in both the UE 100 and the BSF 104, by concatenating CK and IK. The key material Ka is then used to secure the Ua interface 110.

Referring to Fig. 2, in a step 216 the bootstrapping information determined is then provided to one or more NAFs 102 in a push operation. It should be noted that the NAFs may be identified in a number of ways. The NAFs may be identified by a valid TID, following steps 208 and 210, and without the need for any bootstrapping operation. The NAFs may be identified by an invalid TID, following step 210, but with the need for a bootstrapping operation. The NAFs may be identified by explicit NAF-IDs in step 212.

Thus any NAFs identified by the transaction identifier following step 210 have the bootstrapping information pushed thereto. Similarly any NAFs having their identities included in the request message, following step 212, have the bootstrapping information returned from the bootstrap step 214 pushed thereto.

In the push operation, the BSF 104 provides to the identified NAF(s) 102 the key material for the UE, which the UE has requested to be pushed to the NAF(s). The NAF(s) then derive the keys required to protect the protocol used over the Ua interface 110 in the same way as the UE 100 did.

In general, the invention is not limited to any particular technique for the provision of the NAF identifiers. IN step 212, any NAF identifiers present are determined. Whilst the NAF identifiers may be provided in the request 302, for example, they may also be provided in the bootstrapping phase, for example at the end of the bootstrapping phase in the HTTP Digest AKA message 310.

The transmission of the bootstrapping information from the BSF 104 to one or more NAFs 102 is identified in Fig. 3 by message 312. The bootstrapping information preferably comprises a transaction identifier, a NAF specific shared secret, and an optional subscriber profile information ("prof_naf"). The NAF specific shared secret, denoted Ks_naf, is the authentication key established between the UE 100 and the BSF 104, and modified for specific use for communications between the UE 100 and the specific NAF. Ks_naf is derived from Ks by using a parameter. Ks is the master key, and Ks_naf is a NAF specific key. The bootstrapping information transmitted to each NAF is thus unique to that NAF, in accordance with the specific shared secret Ks_naf for that NAF. As mentioned hereinabove, the nature of the information provided to any NAF as a result of the push operation in accordance with this invention is not modified.

The messages 312 and 314 are only exchanged if specific NAF_IDs are included in the original request message from the UE 100. This is described further below. If a transaction identifier is present in the request from the UE, then there must be one or more NAF identifiers present. If such NAF identifiers are present, then messages 312 and 314 are exchanged. This is represented by the flow of steps 208 to 210 to 216 in Fig. 2.

If the transaction identifier is not valid, for example because it is too old, then bootstrapping is performed in messages 304 to 310. This is represented in Fig. 2 by message flow 208 to 210 to 214. This also requires the NAF_ID associated with the TID to be provided to step 216 for the push operation. It should be noted that if no transaction identifier is present in step 208, then the method reverts to step 214. If there are no transaction identifiers present in step 208, then bootstrapping is performed in steps 214 and 215, and the NAF_IDs for pushing - if any - supplied in step 216.

Thus a push operation only occurs where at least one NAF_ID is present. In the absence of a NAF_ID, a bootstrapping operation is performed in step 214, but no push occurs, since no NAF is identified for a push to be made to in step 212.

After transmission of the bootstrapping information to the one or more NAFs 102 as illustrated by message 312 and step 216, the NAFs 102 transmit an acknowledgement message back to the BSF 104. This acknowledges, for a given NAF, that the bootstrapping information was received and has been stored. This is represented by step 218 in Fig. 2.

In a step 220, the UE 100 is notified of the NAFs to which the bootstrapping information has been pushed. As shown in Fig. 3, a HTTP response "200 OK" message 316 is sent to the UE 100.

It is envisaged that in one embodiment in the event that one or more NAFs do not respond with an acknowledgement, then a list of those NAFs which did positively respond with an acknowledgement is returned to the UE 100. The message 316 preferably includes a transaction identifier.

Alternatively, the response to the UE may contain no indication as to whether the push operation was successful or not.

If a full bootstrapping procedure was carried out, the response may include the new transaction identifier.

Thereafter, as represented by step 222 in Fig. 2, the user equipment may contact any NAF 102, and the NAF 102, having bootstrapping information pushed thereto, does not need to access such information from the BSF 104. As such the response time by the NAF 102 responsive to an access from the UE 100 is shortened. The UE and the NAF share the keys required to protect the Ua interface, and hence there is no need for the NAF to retrieve any key(s) from the BSF. If the NAF is a NAF to which keys have not been pushed, then a conventional operation to perform bootstrapping may be performed.

In the preferred embodiment, the bootstrapping information is pushed to network application functions which are specifically identified. That is, the bootstrapping information is pushed to those network application functions having their network application function identities provided to the BSF 104. The network application function identity, NAF_ID, is preferably in a format which is easily discovered or known by the UE 100, so that the UE 100 can include such identities in a request to push information. It is also important that the network application function identities uniquely identify an NAF. For example, the FQDN (Fully Qualified Domain Name) uniquely identifies an NAF and may be easily discovered or known by the UE.

It is envisaged in an alternative embodiment that rather than providing the BSF 104 with specific NAF identities, the UE 100 may provide the BSF 104 with an identity of NAF types. The bootstrapping information may then be pushed to all NAFs of that type by the BSF 104, responsive to an appropriate request from the UE 100. A single identifier, identifying a NAF type, may thus result in a push to a plurality of NAFs.

In the foregoing description with relation to Fig. 2, it is shown that the BSF performs determination of a transaction identifier in step 208, and determination of NAF_IDs in step 212, and bootstrapping in step 214. Where a transaction identity is provided, there may be no requirement to perform a bootstrap operation in step 214, since the bootstrap information associated with the transaction identifier received is suitable to be used. Thus, in an embodiment, only steps 208 and 210 may be performed if a valid transaction identifier is thereby identified. If no transaction identifier is identified, then the bootstrap operation is preferably performed in step 214 in order to obtain the necessary bootstrap information.

Thus, as described, the invention provides a technique by which the user equipment requests the bootstrap function to push bootstrap information to selected network application functions. The bootstrap information is then available in those network application functions when the user equipment makes a direct access to any such network application function. As such, the network application functions do not have to dynamically access the bootstrap function in order to retrieve the bootstrap information responsive to an access from the user equipment.

The unsolicited push of bootstrapping information to selected NAFs simplifies the procedures NAF needs to do during shared key usage over the Ua interface. For example, it simplifies shared key TLS (Transport Layer Security) usage, since when the UE establishes the connection using shared key TLS between it and a NAF, the NAF would already have the related session ID and master key in its TLS cache. This would remove the need for an "active" session cache functionality.

Although the invention has been described herein by way of reference to a particular exemplary embodiment implemented in a 3GPP architecture suitable for implementation of the AKA protocol, the invention is not limited in its applicability to such an environment. More generally, the invention may be utilised in any network arrangement where access to a function is dependent upon that function retrieving authentication information.

It should be noted that the term 'network application function' has no special meaning. It is used to refer to a function or entity which provides or supports an application to which a user equipment may require access.

Various adaptations and modifications to the invention as described herein will be apparent to one skilled in the art, the scope of the invention being defined by the appended claims.

## Claims

1. A method of providing bootstrapping information to a network application function entity (102) to enable access by a user equipment (100), **characterised in that** the method comprises: generating a request from a user equipment (100) to provide bootstrapping information to at least one network application function entity (102); receiving said request at a bootstrapping functional entity (104); determining said bootstrapping information at said functional entity (104); and transmitting said determined bootstrapping information to the at least one network application function entity (102).

2. A method according to claim 1 wherein said bootstrapping information is determined in dependence on a transaction identifier included in said request.

3. A method according to claim 1 or 2 wherein the request includes at least one network application function identity.

4. A method according to any one of claim 1 to 3 wherein the request includes at least one type of network application function.

5. A method according to any preceding claim wherein said bootstrapping information is determined by performing a bootstrapping operation.

6. A method according to any preceding claim wherein the step of determining the bootstrapping information comprises establishing an authentication procedure between the user equipment (100) and the bootstrapping functional entity (104).

7. A method according to claim 6 wherein the authentication procedure between the user equipment (100) and the bootstrapping functional entity (104) establishes a shared key.

8. A method according to claim 7 wherein the bootstrapping information provided to the at least one network application function (102) is based on the shared key.

9. A method according to claim 7 wherein the bootstrapping information provided to the at least one network application (102) function includes a transaction identifier.

10. A method according to claim 7 wherein the bootstrapping information provided to the at least one network application function (102) includes subscriber profile information.

11. A method according to any one of claims 7 to 10 wherein the bootstrapping information provided to the network application function (102) is network application function specific.

12. A method according to any one of claims 6 to 11 wherein the step of obtaining bootstrapping information includes retrieving information from a home subscriber server (106).

13. A bootstrapping functional entity (104) **characterised in that** it comprises: receiving means for receiving a request from a user equipment (100) to provide bootstrapping information to at least one network application function entity (102); determining means for determining said bootstrapping information; and transmitting means for transmitting said bootstrapping information to the at least one network application function entity (102).

14. A bootstrapping functional entity according to claim 13 further including determining means for determining at least one network application function entity identity from said request.

15. A bootstrapping functional entity according to claim 13 wherein the determining means for determining the bootstrapping information comprises authentication means for establishing an authentication procedure between the user equipment (100) and the boot strapping function (104).

16. A bootstrapping functional entity according to claim 15 wherein the authentication means establishes a shared key.

17. A bootstrapping functional entity according to claim 16 wherein the bootstrapping information provided to the at least one network application function entity (102) is based on the shared key.

18. A bootstrapping functional entity according to claim 16 or claim 17 wherein the bootstrapping information provided to the at least one network application function entity (102) includes a transaction identifier.

19. A bootstrapping functional entity according to any one of claims 16 to 18 wherein the bootstrapping information provided to the at least one network application function entity (102) includes subscriber profile information.

20. A user equipment (100), **characterised in that** the user equipment (100) is adapted to transmit a request to a bootstrapping functional entity (104) to provide bootstrapping information to at least one network application function entity (102).

21. A user equipment (100) according to claim 20 wherein the request includes one of a transaction identifier or a network application function identity.

22. A network application function entity (102), **characterised in that** the network application function entity (102) is adapted to receive unsolicited bootstrapping information from a bootstrapping functional entity (104).

23. A network application function entity (102) according to claim 22 wherein said bootstrapping information is associated with a user equipment (100).

24. A network application function entity (102) according to claim 23 wherein the bootstrapping information is established between said bootstrapping functional entity (104) and the user equipment (100).

25. A network application function entity (102) according to claims 22 to 24 wherein the receipt of the bootstrapping information from a bootstrapping functional entity (104) is responsive to a request by a user equipment (100) to the bootstrapping functional entity (104).

26. A communication system including at least one user equipment (100) and at least one network application functional entity (102), the system further including a bootstrapping functional entity (104), wherein the user equipment (100) includes means to transmit a request to push authentication information to at least one network application function, the bootstrapping functional entity (104) includes: receiving means for receiving the request from the user equipment (100), and transmitting means for transmitting said authentication information to the at least one network application function entity (102), and the at least one network application function includes means adapted to receive unsolicited bootstrapping information from the bootstrapping functional entity (104).

## Patentansprüche

1. Verfahren zum Bereitstellen von Bootstrapping-Information einer Netzwerkanwendungsfunktionseinheit (102) um Zugriff mittels einer Benutzervorrichtung (100) zu ermöglichen, **dadurch gekennzeichnet, dass** das Verfahren umfasst:
Erzeugen einer Anfrage von einer Benutzervorrichtung (100), Bootstrapping-Information wenigstens einer Netzwerkanwendungsfunktionseinheit (102) bereitzustellen; die Anfrage bei wenigstens einer Bootstrapping-Funktionseinheit (104) zu empfangen; die Bootstrapping-Information bei der Funktionseinheit (104) zu ermitteln; und die ermittelte Bootstrapping-Information zu der wenigstens einen Netzwerkanwendungsfunktionseinheit (102) zu übertragen.

2. Verfahren nach Anspruch 1, wobei die Bootstrapping-Information in Abhängigkeit von einer in der Anfrage enthaltenen Transaktionsidentifizierung ermittelt wird.

3. Verfahren nach Anspruch 1 oder 2, wobei die Anfrage wenigstens eine Netzwerkanwendungsfunktionsidentität aufweist.

4. Verfahren nach einem der Ansprüche 1 bis 3, wobei die Anfrage wenigstens einen Typ einer Netzwerkanwendungsfunktion aufweist.

5. Verfahren nach einem vorherigen Anspruch, wobei die Bootstrapping-Information ermittelt wird, in dem eine Bootstrapping-Operation durchgeführt wird.

6. Verfahren nach einem vorherigen Anspruch, wobei der Schritt, die Bootstrapping-Information zu ermitteln, umfasst, eine Authentifizierungsprozedur zwischen der Benutzervorrichtung (100) und der Bootstrapping-Funktionseinheit (104) .

7. Verfahren nach Anspruch 6, wobei die Authentifizierungsprozedur zwischen der Benutzervorrichtung (104) und der Bootstrapping-Funktionseinheit (104) einen gemeinsamen Schlüssel festlegt.

8. Verfahren nach Anspruch 7, wobei die Bootstrapping-Information, die der wenigstens einen Netzwerkanwendungsfunktion (102) bereitgestellt wird, auf dem gemeinsamen Schlüssel basiert.

9. Verfahren nach Anspruch 7, wobei die Bootstrapping-Information, die der wenigstens einen Netzwerkanwendungsfunktion (102) bereitgestellt wird, eine Transaktionsidentifizierung aufweist.

10. Verfahren nach Anspruch 7, wobei die Bootstrapping-Information, die der wenigstens einen Netzwerkanwendungsfunktion (102) bereitgestellt wird, Teilnehmerprofilinformation aufweist.

11. Verfahren nach einem der Ansprüche 7 bis 10, wobei die der Netzwerkanwendungsfunktion (102) bereitgestellte Bootstrapping-Information netzwerkanwendungsfunktionsspezifisch ist.

12. Verfahren nach einem der Ansprüche 6 bis 11, wobei der Schritt, Bootstrapping-Information zu erhalten, aufweist, Information von einem Teilnehmer-Heimatserver (106) abzurufen.

13. Bootstrapping-Funktionseinheit (104) **dadurch gekennzeichnet, dass** sie umfasst: eine Empfangseinrichtung zum Empfangen einer Anfrage von einer Benutzervorrichtung (100), Bootstrapping-Information wenigstens einer Netzwerkanwendungsfunktionseinheit (102) bereitzustellen; eine Ermittlungseinrichtung zum Ermitteln der Bootstrapping-Information; und eine Übertragungseinrichtung zum Übertragen der Bootstrapping-Information zu der wenigstens einen Netzwerkanwendungsfunktionseinheit (102).

14. Bootstrapping-Funktionseinheit nach Anspruch 13, ferner aufweisend, eine Ermittlungseinrichtung zum Ermitteln wenigstens einer Netzwerkanwendungsfunktionseinheitsidentität aus der Anfrage.

15. Bootstrapping-Funktionseinheit nach Anspruch 13, wobei die Ermittlungseinrichtung zum Ermitteln der Bootstrapping-Information eine Authentifizierungseinrichtung umfasst, um eine Authentifizierungsprozedur zwischen der Benutzervorrichtung (100) und der Bootstrapping-Funktion (104) festzulegen.

16. Bootstrapping-Funktionseinheit nach Anspruch 15, wobei die Authentifizierungseinrichtung einen gemeinsamen Schlüssel festlegt.

17. Bootstrapping-Funktionseinheit nach Anspruch 16, wobei die der wenigstens einen Netzwerkanwendungsfunktionseinheit (102) bereitgestellte Bootstrapping-Information auf dem gemeinsamen Schlüssel basiert.

18. Bootstrapping-Funktionseinheit nach Anspruch 16 oder Anspruch 17, wobei die der wenigstens einen Netzwerkanwendungsfunktionseinheit (102) bereitgestellte Bootstrapping-Information eine Transaktionsidentifizierung aufweist.

19. Bootstrapping-Funktionseinheit nach einem der Ansprüche 16 bis 18, wobei die der wenigstens einen Netzwerkanwendungsfunktionseinheit (102) bereitgestellte Bootstrapping-Information Teilnehmerprofilinformationen aufweist.

20. Benutzervorrichtung (100), **dadurch gekennzeichnet, dass** die Benutzervorrichtung (100) ausgelegt ist, eine Anfrage an eine Bootstrapping-Funktionseinheit (104) zu übermitteln, Bootstrapping-Information wenigstens einer Netzwerkanwendungsfunktionseinheit (102) bereitzustellen.

21. Benutzervorrichtung (100) nach Anspruch 20, wobei die Anfrage wenigstens eine einer Transaktionsidentifizierung oder einer Netzwerkanwendungsfunktionsidentifizierung aufweist.

22. Netzwerkanwendungsfunktionseinheit (102) **dadurch gekennzeichnet, dass** die Netzwerkanwendungsfunktionseinheit (102) ausgelegt ist, nicht abgerufene Bootstrapping-Information von einer Bootstrapping-Funktionseinheit (104) zu empfangen.

23. Netzwerkanwendungsfunktionseinheit (102) nach Anspruch 22, wobei die Bootstrapping-Information einer Benutzervorrichtung (100) zugeordnet ist.

24. Netzwerkanwendungsfunktionseinheit (102) nach Anspruch 23, wobei die Bootstrapping-Information zwischen der Bootstrapping-Funktionseinheit (104) und der Benutzervorrichtung (100) festgelegt ist.

25. Netzwerkanwendungsfunktionseinheit (102) nach Ansprüchen 22 bis 24, wobei der Empfang der Bootstrapping-Information auf eine Anfrage von einer Benutzervorrichtung (100) an die Bootstrapping-Funktionseinheit (104) reagiert.

26. Kommunikationssystem mit wenigstens einer Benutzervorrichtung (100) und wenigstens einer Netzwerkanwendungsfunktionseinheit (102), wobei das System ferner eine Bootstrapping-Funktionseinheit (104) aufweist, bei dem die Benutzervorrichtung (100) eine Einrichtung zum Übertragen einer Anfrage aufweist, um Authentifizierungsinformation zu wenigstens einer Netzwerkanwendungsfunktion per Push zu übertragen, wobei die Bootstrapping-Funktionseinheit (104) aufweist: eine Empfangseinrichtung zum Empfangen der Anfrage von der Benutzervorrichtung (100) und eine Übertragungseinrichtung zum Übertragen der Authentifizierungsinformation zu der wenigstens einen Netzwerkanwendungsfunktionseinheit (102), und die wenigstens eine Netzwerkanwendungsfunktion weist eine Einrichtung auf, die ausgelegt ist, nicht abgerufene Bootstrapping-Information von der Bootstrapping-Funktionseinheit (104) zu empfangen.

## Revendications

1. Procédé consistant à fournir des informations d'amorçage à une entité de fonction d'application réseau (102) pour permettre l'accès par un équipement utilisateur (100), **caractérisé en ce que** le procédé comprend : la génération d'une requête à partir d'un équipement utilisateur (100) pour fournir des informations d'amorçage à au moins une entité de fonction d'application réseau (102) ; la réception de ladite requête à une entité fonctionnelle d'amorçage (104) ; la détermination desdites informations d'amorçage au niveau de ladite entité fonctionnelle (104) ; et la transmission desdites informations d'amorçage déterminées à la au moins une entité de fonction d'application réseau (102).

2. Procédé selon la revendication 1, dans lequel lesdites informations d'amorçage sont déterminées en fonction d'un identifiant de transaction inclus dans ladite requête.

3. Procédé selon la revendication 1 ou 2, dans lequel la requête comprend au moins une identité de fonction d'application réseau.

4. Procédé selon l'une quelconque des revendications 1 à 3, dans lequel la requête comprend au moins un type de fonction d'application réseau.

5. Procédé selon l'une quelconque des revendications précédentes, dans lequel lesdites informations d'amorçage sont déterminées en réalisant une opération d'amorçage.

6. Procédé selon l'une quelconque des revendications précédentes, dans lequel l'étape de détermination des informations d'amorçage comprend l'établissement d'une procédure d'authentification entre l'équipement utilisateur (100) et l'entité fonctionnelle d'amorçage (104).

7. Procédé selon la revendication 6, dans lequel la procédure d'authentification entre l'équipement utilisateur (100) et l'entité fonctionnelle d'amorçage (104) établit une clé secrète.

8. Procédé selon la revendication 7, dans lequel les informations d'amorçage fournies à la au moins une fonction d'application réseau (102) sont basées sur la clé secrète.

9. Procédé selon la revendication 7, dans lequel les informations d'amorçage fournies à la au moins une fonction d'application réseau (102) comprennent un identifiant de transaction.

10. Procédé selon la revendication 7, dans lequel les informations d'amorçage fournies à la au moins une fonction d'application réseau (102) comprennent des informations de profil d'abonné.

11. Procédé selon l'une quelconque des revendications 7 à 10, dans lequel les informations d'amorçage fournies à la fonction d'application réseau (102) sont spécifiques de la fonction d'application réseau.

12. Procédé selon l'une quelconque des revendications 6 à 11, dans lequel l'étape consistant à obtenir des informations d'amorçage comprend la récupération d'informations d'un serveur numérique d'abonné (106).

13. Entité fonctionnelle d'amorçage (104) **caractérisée en ce qu'**elle comprend : un moyen de réception pour recevoir une requête d'un équipement utilisateur (100) pour fournir des informations d'amorçage à au moins une entité de fonction d'application réseau (102) ; un moyen de détermination pour déterminer lesdites informations d'amorçage ; et un moyen de transmission pour transmettre lesdites informations d'amorçage à la au moins une entité de fonction d'application réseau (102).

14. Entité fonctionnelle d'amorçage selon la revendication 13, comprenant en outre un moyen de détermination pour déterminer au moins une identité d'entité de fonction d'application réseau à partir de ladite requête.

15. Entité fonctionnelle d'amorçage selon la revendication 13, dans laquelle le moyen de détermination pour déterminer les informations d'amorçage comprend un moyen d'authentification pour rétablir une procédure d'authentification entre l'équipement utilisateur (100) et la fonction d'amorçage (104).

16. Entité fonctionnelle d'amorçage selon la revendication 15, dans laquelle le moyen d'authentification établit une clé secrète.

17. Entité fonctionnelle d'amorçage selon la revendication 16, dans laquelle les informations d'amorçage fournies à la au moins une entité de fonction d'application réseau (102) sont basées sur la clé secrète.

18. Entité fonctionnelle d'amorçage selon la revendication 16 ou la revendication 17, dans laquelle les informations d'amorçage fournies à la au moins une entité de fonction d'application réseau (102) comprennent un identifiant de transaction.

19. Entité fonctionnelle d'amorçage selon l'une quelconque des revendications 16 à 18, dans laquelle les informations d'amorçage fournies à la au moins une entité de fonction d'application réseau (102) comprennent des informations de profil d'abonné.

20. Equipement utilisateur (100), **caractérisé en ce que** l'équipement utilisateur (100) est adapté pour transmettre une requête à une entité fonctionnelle d'amorçage (104) pour fournir des informations d'amorçage à au moins une entité de fonction d'application réseau (102).

21. Equipement utilisateur (100) selon la revendication 20, dans laquelle la requête comprend l'un d'un identifiant de transaction ou d'une identité de fonction d'application réseau.

22. Entité de fonction d'application réseau (102), **caractérisée en ce que** l'entité de fonction d'application réseau (102) est adaptée pour recevoir des informations d'amorçage non sollicitées provenant d'une entité fonctionnelle d'amorçage (104).

23. Entité de fonction d'application réseau (102) selon la revendication 22, dans laquelle lesdites informations d'amorçage sont associées à un équipement utilisateur (100).

24. Entité de fonction d'application réseau (102) selon la revendication 23, dans laquelle les informations d'amorçage sont établies entre ladite entité fonctionnelle d'amorçage (104) et l'équipement utilisateur (100).

25. Entité de fonction d'application réseau (102) selon les revendications 22 à 24, dans laquelle la réception des informations d'amorçage provenant d'une entité fonctionnelle d'amorçage (104) est sensible à une requête par un équipement utilisateur (100) à l'entité fonctionnelle d'amorçage (104).

26. Système de communication comprenant au moins un équipement utilisateur (100) et au moins une entité fonctionnelle d'application réseau (102), le système comprenant en outre une entité fonctionnelle d'amorçage (104), dans lequel l'équipement utilisateur (100) comprend un moyen pour transmettre une requête pour pousser des informations d'authentification à au moins une fonction d'application réseau, l'entité fonctionnelle d'amorçage (104) comprend : un moyen de réception pour recevoir la requête de l'équipement utilisateur (100), et un moyen de transmission pour transmettre lesdites informations d'authentification à la au moins une entité de fonction d'application réseau (102), et la au moins une fonction d'application réseau comprend un moyen adapté pour recevoir des informations d'amorçage non sollicitées provenant de l'entité fonctionnelle d'amorçage (104).
